# EUROPÄISCHE PATENTANMELDUNG

(11) **EP 4 764 399 A1**
(43) Veröffentlichungstag der Anmeldung: **24.06.2026**
(21) Anmeldenummer: 24221950.9
(22) Anmeldetag: 19.12.2024
(51) Int. Cl.: G01B 11/00, G01B 21/04

(54) **VERFAHREN UND VORRICHTUNG ZUR OPTISCHEN MESSUNG**

(71) Anmelder: Klingelnberg GmbH, 42499 Hückeswagen (DE)
(72) Erfinder: Lüdenbach, Johannes, 51766 Engelskirchen (DE)
(74) Vertreter: Janke Scholl Patentanwälte PartG mbB

(57) **Zusammenfassung**

Verfahren, mit den Verfahrensschritten: Messen eines Bauteils (4, B) mittels eines optischen Abstandssensors (6) einer Koordinatenmessmaschine (2), wobei ein Messweg mittels einer Messbewegung abgefahren wird; und Regeln eines Abstands des optischen Abstandssensors (6) zu dem Bauteil (4, B) während des Messens; wobei das Regeln des Abstands ein Bestimmen einer korrigierten Messbewegung gemäß einer ersten Taktfrequenz aufweist, und dass das Regeln des Abstands eine Lagereglung zum Abfahren der korrigierten Messbewegung gemäß einer zweiten Taktfrequenz aufweist, wobei die zweite Taktfrequenz größer ist als die erste Taktfrequenz.

## Beschreibung

Die vorliegende Erfindung betrifft ein Verfahren mit den Verfahrensschritten: Messen eines Bauteils mittels eines optischen Abstandssensors einer Koordinatenmessmaschine, wobei ein Messweg mittels einer Messbewegung abgefahren wird. Weiter betrifft die Erfindung eine Vorrichtung zur Ausführung eines solchen Verfahrens.

Optische Messverfahren gewinnen aufgrund ihres Geschwindigkeitsvorteils gegenüber taktilen Messverfahren in der industriellen Koordinatenmesstechnik zunehmend an Bedeutung. Während der optischen Messung muss vermieden werden, dass der optische Abstandssensor mit dem zu messenden Bauteil kollidiert. Zudem sollte sichergestellt werden, dass sich die zu messende Kontur des zu messenden Bauteils während der Messung jederzeit innerhalb des Messbereichs des betreffenden optischen Abstandssensors befindet.

Die Veröffentlichung EP 4 386 313 A1 beschreibt das Regeln eines Abstands eines optischen Abstandssensors zu einem zu messenden Bauteil. Hierbei wird eine Abweichung eines einzuhaltenden Soll-Abstands zu einem gemessenen Ist-Abstand gemessen und mittels einer Lageregelung des optischen Abstandssensors geregelt. Nachteilig ist, dass die gemessene Abweichung unmittelbar im Lageregelkreis des Abstandssensors verarbeitet wird und es so, je nach Beschaffenheit der zu messenden Oberfläche, zu einer Schwingungsanregung bzw. zu einem Aufschwingen des optischen Abstandssensors oder zu einer Schwingungsanregung bzw. zu einem Aufschwingen einer den optischen Abstandssensor tragenden Achse kommen kann.

Denn sofern die zu messende Kontur des Bauteils z.B. Welligkeiten mit einem sich wiederholenden Muster aufweist, folgt die Lageregelung des Abstandssensors unmittelbar diesen Welligkeiten. Da eine Lageregelung in der Koordinatenmesstechnik üblicherweise mit hohen Frequenzen erfolgt, werden diese Welligkeiten somit hochfrequent abgetastet und nachgefahren, d.h. unmittelbar in die Kinematik der Messbewegung übertragen. So kann es zu einer Schwingungsanregung und zu einer daraus resultierenden Beeinträchtigung der Messergebnisse kommen.

Vor diesem Hintergrund liegt der vorliegenden Erfindung die technische Problemstellung zugrunde, ein verbessertes Verfahren sowie eine verbesserte Vorrichtung zur optischen Messung anzugeben, die insbesondere eine robuste und schwingungsfreie Lage- bzw. Abstandsregelung eines optischen Abstandssensors relativ zu einem zu messenden Bauteil ermöglichen.

Die voranstehend beschriebene, technische Problemstellung wird mit den Merkmalen der unabhängigen Ansprüche gelöst. Weitere Ausgestaltungen der Erfindung ergeben sich aus den abhängigen Ansprüche und der nachstehenden Beschreibung.

Gemäß einem ersten Aspekt betrifft die Erfindung ein Verfahren, mit den Verfahrensschritten: Messen eines Bauteils mittels eines optischen Abstandssensors einer Koordinatenmessmaschine, wobei ein Messweg mittels einer Messbewegung abgefahren wird; und Regeln eines Abstands des optischen Abstandssensors zu dem Bauteil während des Messens. Das Verfahren zeichnet sich dadurch aus, dass das Regeln des Abstands ein Bestimmen einer korrigierten Messbewegung gemäß einer ersten Taktfrequenz aufweist und dass das Regeln des Abstands eine Lagereglung zum Abfahren der korrigierten Messbewegung gemäß einer zweiten Taktfrequenz aufweist, wobei die zweite Taktfrequenz größer ist als die erste Taktfrequenz.

Erfindungsgemäß erfolgt das Bestimmen der korrigierten Messbewegung demnach mit einem geringeren Regeltakt als die Lageregelung. Auf diese Weise wird zwar im Rahmen der Abstandsregelung ein Ist-Abstand weniger präzise an einen geforderten Soll-Abstand angeglichen. Jedoch kann der Einfluss periodischer Oberflächenfehler, wie Welligkeiten oder dergleichen, auf die Lageregelung reduziert werden. So können periodische Oberflächenprofile, wie Welligkeiten oder dergleichen, deren Frequenz geringer ist als die erste Taktfrequenz, mittels der erfindungsgemäßen Bestimmung der korrigierten Messbewegung geglättet werden bzw. es kann vermieden werden, dass diese Welligkeiten unmittelbar in eine Achskinematik übertragen werden. Ein Aufschwingen bzw. eine Schwingungsanregung, die durch ein präzises Nachfahren derartiger Welligkeiten erfolgen könnte, kann somit vermieden werden. Mit anderen Worten wird erfindungsgemäß zugelassen, dass der Abstand des optischen Sensors einer zu messenden Kontur weniger genau folgt, um eine Schwingungsanregung zu vermeiden. Eine Abstandsabweichung während der Abstandsregelung kann daher in gewissen Grenzen zugelassen werden, zugunsten einer stetigen, glatten Kinematik der Messbewegungen der Koordinatenmessmaschine.

Es kann daher von einem niederfrequenten Regelkreis zum Bestimmen einer korrigierten Messbewegung gesprochen werden, der diese korrigierten Messbewegungen an einen höherfrequenten Lageregelkreis übergibt.

Eine gemessene Abstandsabweichung wird daher nicht unmittelbar an die Lageregelung übergeben, sondern hat lediglich mittelbar Einfluss auf die Lageregelung - und zwar über die korrigierte Messbewegung. Mit anderen Worten ist das Bestimmen einer Abstandsabweichung von der Lageregelung entkoppelt, um eine Schwingungsanregung zu vermeiden. Das Abfahren der korrigierten Messbewegung mittels der Lageregelung erfolgt daher unabhängig von der momentanen Abstandsabweichung des optischen Sensors von einem vorgegebenen Soll-Abstand zu einer zu messenden Kontur eines Bauteils. Die Lageregelung des optischen Abstandssensors ist daher unabhängig von der aktuellen Abstandsabweichung. Vielmehr wird eine Abstandsabweichung in Kauf genommen, um eine Schwingungsanregung zu vermeiden.

Die zweite Taktfrequenz kann größer oder gleich dem Zehnfachen der ersten Taktfrequenz sein. Die zweite Taktfrequenz kann größer oder gleich dem Fünfundzwanzigfachen der ersten Taktfrequenz sein. Die zweite Taktfrequenz kann größer oder gleich dem Fünfzigfachen der ersten Taktfrequenz sein. Die zweite Taktfrequenz kleiner oder gleich dem Hundertfachen der ersten Taktfrequenz sein. Die erste Taktfrequenz kann z.B. 20 Hz betragen. Die zweite Taktfrequenz kann z.B. 1000 Hz betragen.

Das Bestimmen der korrigierten Messbewegung kann für einen jeweiligen Takt der ersten Taktfrequenz das Bestimmen eines Weg-Zeit-Profils aufweisen, wobei eine Taktzeit des ersten Takts geringer ist als eine Zeitspanne des bestimmten Weg-Zeit-Profils, so dass eine weitere korrigierte Messbewegung mit einem weiteren Weg-Zeit-Profil bereits bestimmt wird, bevor ein Ende des zuvor bestimmten Weg-Zeit-Profils erreicht worden ist.

Mit anderen Worten ist vorgesehen, dass während des Abfahrens der korrigierten Messbewegung bereits die nächste, im niederfrequenten Takt berechnete korrigierte Messbewegung in die laufende Bewegung z.B. der Sensorachse übergeht, so dass ein glatter sprungfreier Übergang geschaffen werden kann.

Das Bestimmen der korrigierten Messbewegung kann derart erfolgen, dass Korrekturbewegungen bestimmt werden, die der Messbewegung überlagert werden, um die korrigierte Messbewegung anzugeben. Dieses Vorgehen kann z.B. beim optischen Messen eines Bauteils mit bekannter Soll-Geometrie sinnvoll sein, da die Messbewegungen nur im Bereich der zu erwartenden Fertigungsabweichungen angepasst werden müssen. In diesem Fall können für einen jeweiligen Takt der ersten Taktfrequenz Korrekturbewegungen bestimmt werden, die den Messbewegungen oder zuvor bestimmten korrigierten Messbewegungen überlagert werden, um die korrigierten Messbewegungen für diesen Takt zu definieren.

Das Bestimmen der korrigierten Messbewegung kann alternativ derart erfolgen, dass die Messbewegung durch die korrigierte Messbewegung ersetzt wird. So wird die korrigierte Messbewegung für einen jeweiligen Takt der ersten Taktfrequenz jeweils neu bestimmt. Dabei kann vorgesehen sein, dass die gemäß der ersten Taktfrequenz aufeinanderfolgenden, korrigierten Messbewegungen zeitlich überlappend bestimmt werden, so dass vor dem Erreichen eines Endes der aktuellen korrigierten Messbewegung bereits eine neue, korrigierte Messbewegung bestimmt wird und insbesondere derart bestimmt wird, dass aufeinanderfolgende, korrigierte Messbewegungen sprungfrei, d.h. stetig und glatt ineinander übergehen. Dieses Vorgehen kann z.B. beim Messen einer unbekannten Kontur sinnvoll sein, d.h. beim Messen eines Bauteils mit unbekannter Soll-Geometrie sinnvoll sein.

Insbesondere kann vorgesehen sein, dass aus einer aktuell gemessenen Abstandsabweichung eines Ist-Abstands von einem vorgegebenen Soll-Abstand eine neue anzufahrende Soll-Position bestimmt wird, für die die Abweichung Null wäre, so dass der Sensor der Kontur des Bauteils nachgeführt wird, insbesondere kontinuierlich in einer geglätteten Bewegung nachgeführt wird.

Das Weg-Zeit-Profil der korrigierten Messbewegung kann z.B. einer Sensorachse zugeordnet sein, wobei die Sensorachse eine gesteuerte Achse der Koordinatenmessmaschine ist, die den optischen Abstandssensor trägt.

Es kann vorgesehen sein, dass ein jeweiliges Weg-Zeit-Profil gemäß einem Takt der ersten Taktfrequenz durch zweimalige Integration einer als konstant vorgegebenen Maximalbeschleunigung berechnet wird, wobei die Maximalbeschleunigung innerhalb des Takts einmal ihr Vorzeichen wechselt, um einen S-förmigen Verlauf des Weg-Zeit-Profils anzugeben.

Es versteht sich, dass für zwei oder mehr Achsen der Koordinatenmessmaschine Weg-Zeit-Profile für einen jeweiligen Takt der ersten Taktfrequenz bestimmt werden können, um achsspezifisch korrigierte Messbewegungen anzugeben, wobei der korrigierte Messweg als überlagerte Bewegung mehrerer Maschinenachsen abgefahren wird bzw. die korrigierte Messbewegung durch überlagerte Bewegung mehrerer Maschinenachsen erzeugt wird.

Es kann vorgesehen sein, dass das Bestimmen der korrigierten Messbewegung nur für eine einzige Achse der Koordinatenmessmaschine durchgeführt wird, und zwar für die Sensorachse, die den optischen Abstandssensor trägt.

Zum Bestimmen der korrigierten Messbewegung kann eine Abstandsabweichung des optischen Sensors im Vergleich zu einem vorgegebenen Soll-Abstand zum Bauteil gemessen werden, wobei die Abstandsabweichung insbesondere gemäß der ersten Taktfrequenz erfasst wird. Aus der Abstandsabweichung kann zusammen mit einem vorgegebenen Soll-Abstand eine anzufahrende Soll-Position des optischen Abstandssensors berechnet werden, für die die Abstandsabweichung null wäre.

Um eine Schwingungsanfälligkeit zu vermeiden, kann vorgesehen sein, dass anstelle der Abstandsabweichung die absolute Position des optischen Abstandssensors im Koordinatensystem der Koordinatenmessmaschine für die Berechnung von Weg-Zeit-Profilen verwendet wird.

Der optische Abstandssensor kann ein Punktsensor sein. Der optische Abstandssensor kann ein konfokal chromatischer Abstandssensor sein. Der konfokal chromatische Abstandssensor ist insbesondere ein Punktsensor.

Insbesondere können durch den Punktsensor einzelne Messpunkte nacheinander gemessen werden. Jeder einzelne Messpunkt kann unabhängig und separat von weiteren Messpunkten mittels des Punktsensors erfassbar sein. D.h. mittels des Punktsensors kann es insbesondere möglich sein, einen einzelnen Messpunkt zu erfassen, ohne gleichzeitig weitere Messpunkte zu erfassen. Jedem einzelnen Messpunkt können drei Raumkoordinaten zugeordnet sein, und zwar z.B. ein x-Wert, ein y-Wert und ein z-Wert in einem kartesischen Koordinatensystem x-y-z.

Es kann vorgesehen sein, dass der Punktsensor zur optischen Abstandsmessung eine Tiefenauflösung aufweist. Beispielsweise kann entlang einer optischen Achse des Punktsensors betrachtet in einem Tiefenmessbereich entlang der optischen Achse eine Tiefe, d.h. ein Abstand der optisch angetasteten Oberfläche entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Es kann vorgehen sein, dass die Abstandsmessung eindimensional entlang einer optischen Achse erfolgt und dreidimensionale Messwerte anhand der Position des optischen Abstandssensors im vorgegebenen Koordinatensystem errechnet werden.

Es kann vorgesehen sein, dass der Tiefenmessbereich mindestens 0,5 mm abdeckt, insbesondere mindestens 2 mm abdeckt. Es kann vorgesehen sein, dass der Tiefenmessbereich kleiner als 15 mm ist. Insbesondere kann vorgesehen sein, dass der Tiefenmessbereich größer gleich 0,5 mm und kleiner oder gleich 15 mm ist, insbesondere größer oder gleich 1,5 mm und kleiner oder gleich 15 mm ist.

Beispielsweise kann entlang einer optischen Achse des Punktsensors betrachtet in einem Tiefenmessbereich von wenigen Zentimetern oder wenigen Millimetern oder in einem Tiefenmessbereich von weniger als einem Millimeter entlang der optischen Achse eine Tiefe, d.h. ein Abstand der optisch angetasteten Oberfläche entlang der optischen Achse in einem vorgegebenen Koordinatensystem gemessen werden - z.B. ein Abstand zu einem Ursprung des vorgegebenen Koordinatensystems oder zu einer anderen geometrischen Referenz, wie der Position einer Linse oder dergleichen. Anhand der Abstandsinformation des Punktsensors kann insbesondere ein dreidimensionaler Messpunkt errechnet werden, wobei Informationen zu Achspositionen einer Koordinatenmessmaschine berücksichtigt werden können, die den optischen Punktsensor trägt. Es kann vorgesehen sein, dass die Abstandsmessung eindimensional entlang einer optischen Achse erfolgt und dreidimensionale Messwerte anhand der Position des optischen Abstandssensors errechnet werden.

Es kann vorgesehen sein, dass ein Fokusdurchmesser des optischen Abstandssensors 50 Mikrometer oder weniger beträgt, insbesondere 20 Mikrometer oder weniger beträgt.

Mit dem Regeln des Abstands kann eine Messgenauigkeit der optischen Abstandsmessung verbessert werden. So kann der optische Abstandssensor bevorzugt in einem Ausschnitt eines vorhandenen Tiefenmessbereichs betrieben werden, innerhalb dessen ein Linearitätsfehler des optischen Abstandssensors gering ist.

Es kann vorgesehen sein, dass das Bauteil während des Erfassens von Messpunkten beim Abfahren des Messwegs relativ zu dem optischen Abstandssensor kontinuierlich bewegt wird. Insbesondere kann das Bauteil kontinuierlich um eine Achse rotiert werden, während das optische Messsystem feststeht und/oder mittels einer oder mehrerer gesteuerter Achsen der Koordinatenmessmaschine verschoben wird.

Die korrigierte Messbewegung kann einen sprungfreien Verfahrweg aufweisen, wobei der optische Abstandssensor einer zu messenden Kontur des Bauteils entlang dieses sprungfreien Verfahrwegs nachgeführt wird.

Der sprungfreie Verfahrweg kann segmentweise aus Verfahrwegsegmenten zusammengesetzt sein, wobei sich die Verfahrwegsegmente jeweils durch glatte Funktionen beschreiben lassen, wobei die Verfahrwegsegmente gemäß der ersten Taktfrequenz bestimmt werden, und wobei sich der sprungfreie Verfahrweg durch eine glatte Funktion beschreiben lässt.

"Sprungfrei" beutetet vorliegend im mathematischen Sinn stetig und glatt, d.h. zweimal differenzierbar.

Während des Abfahrens der korrigierten Messbewegung können ein Beschleunigen und ein Abbremsen erfolgen, wobei die Beschleunigung durch eine maximal zulässige Beschleunigung und eine maximal zulässige Geschwindigkeit begrenzt sind. D.h. es können für die Bewegungen der Koordinatenmessmaschine Grenzwerte bezüglich der maximal zulässigen Beschleunigung und der maximal zulässigen Geschwindigkeit vorgegeben sein, die beim Ausführen der korrigierten Messbewegung nicht überschritten werden dürfen. Es können je Maschinenachse der Koordinatenmessmaschine achsspezifische Grenzwerte für die jeweilige zulässige maximale Beschleunigung und maximale Geschwindigkeit vorgegeben sein.

Das Regeln des Abstands kann mittels mindestens einer gesteuerten Achse der Koordinatenmessmaschine erfolgen, wobei diese gesteuerte Achse den optischen Abstandssensors trägt und wobei diese gesteuerte Achse parallel zu einer optischen Achse des optischen Abstandssensors verfahrbar ist.

Während der Messbewegung kann eine Abstandsabweichung des optischen Sensors im Vergleich zu einem vorgegebenen Soll-Abstand aufgrund der korrigierten Messbewegung kleiner als 2 mm sein, insbesondere kleiner als 1 mm sein, weiter insbesondere kleiner als 0,5 mm sein.

Gemäß einem zweiten Aspekt betrifft die Erfindung eine Koordinatenmessmaschine, mit einem optischen Abstandssensor zum Messen eines Bauteils, mit einer Steuerung, wobei die Steuerung zur Ausführung eines erfindungsgemäßen Verfahrens eingerichtet ist.

Nachfolgend wird die Erfindung anhand einer Ausführungsbeispiele darstellenden Zeichnung näher erläutert. Es zeigen jeweils schematisch:
- Fig. 1: eine erfindungsgemäße Koordinatenmessmaschine;
- Fig. 2: einen optischen Abstandssensor mit einem zu messenden Bauteil mit bekannter Kontur;
- Fig. 3: Verfahrensschritte der Abstandsregelung;
- Fig. 4: einen optischen Abstandssensor mit einem zu messenden Bauteil mit unbekannter Kontur;
- Fig. 5: eine Abstandsregelung einer Sensorachse für die unbekannte Kontur.

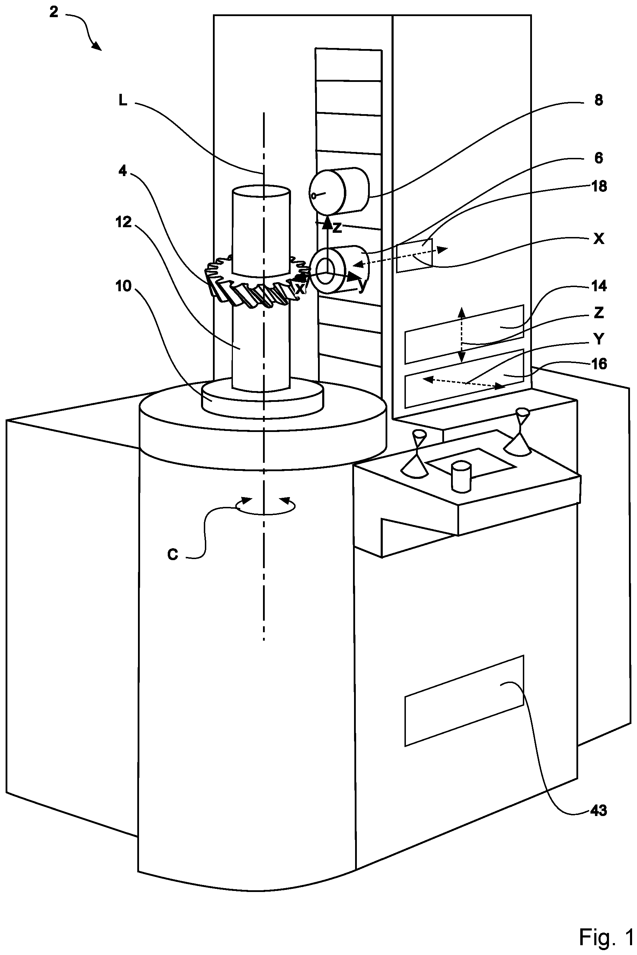

Fig. 1 zeigt eine erfindungsgemäße Koordinatenmessmaschine 2 zum Messen eines Bauteils 4. Das Bauteil 4 ist in der vorliegenden Darstellung ein außenschrägverzahntes Stirnrad. Die Koordinatenmessmaschine 2 hat einen optischen Abstandssensor 6 zum berührungslosen Erfassen von Messpunkten an dem zu messenden Bauteil 4 sowie einen Messtaster 8 zum taktilen Erfassen von Messpunkten an dem zu messenden Bauteil 4.

Das zu messende Bauteil 4 ist an einer Aufnahme 12 gehalten, die auf einem Drehtisch 10 sitzt. Das zu messende Bauteil 4 kann mittels des Drehtischs 10 während der Messung um seine Längsachse L rotiert werden. Der Drehtisch 10 ermöglicht daher eine rotatorische Bewegung, wobei eine CNC-gesteuerte Rotationsachse der Koordinatenmessmaschine 2 mit "C" gekennzeichnet ist.

Zudem hat die Koordinatenmessmaschine drei translatorische Freiheitsgrade gemäß dem kartesischen Koordinatensystem x, y, z. D.h. der optische Abstandssensor 6 kann mittels gesteuerter Abtriebe 14, 16, 18, durch eine überlagerte Bewegung in drei Raumrichtungen x, y, z translatorisch verschoben werden.

Der Antrieb 14 dient der gesteuerten Bewegung des optischen Abstandssensors 6 in z-Richtung und bildet daher eine CNC-gesteuerte Linearachse der Koordinatenmessmaschine 2, die mit "Z" gekennzeichnet ist und die Bewegungen des optischen Abstandssensors 6 parallel zur z-Achse des kartesischen Koordinatensystems x, y, z ermöglicht.

Der Antrieb 16 dient der gesteuerten Bewegung des optischen Abstandssensors 6 in y-Richtung und bildet daher eine CNC-gesteuerte Linearachse der Koordinatenmessmaschine 2, die mit "Y" gekennzeichnet ist und die Bewegungen des optischen Abstandssensors 6 parallel zur y-Achse des kartesischen Koordinatensystems x, y, z ermöglicht.

Der Antrieb 18 dient der gesteuerten Bewegung des optischen Abstandssensors 6 in x-Richtung und bildet daher eine CNC-gesteuerte Linearachse der Koordinatenmessmaschine 2, die mit "X" gekennzeichnet ist und die Bewegungen des optischen Abstandssensors 6 parallel zur x-Achse des kartesischen Koordinatensystems x, y, z ermöglicht.

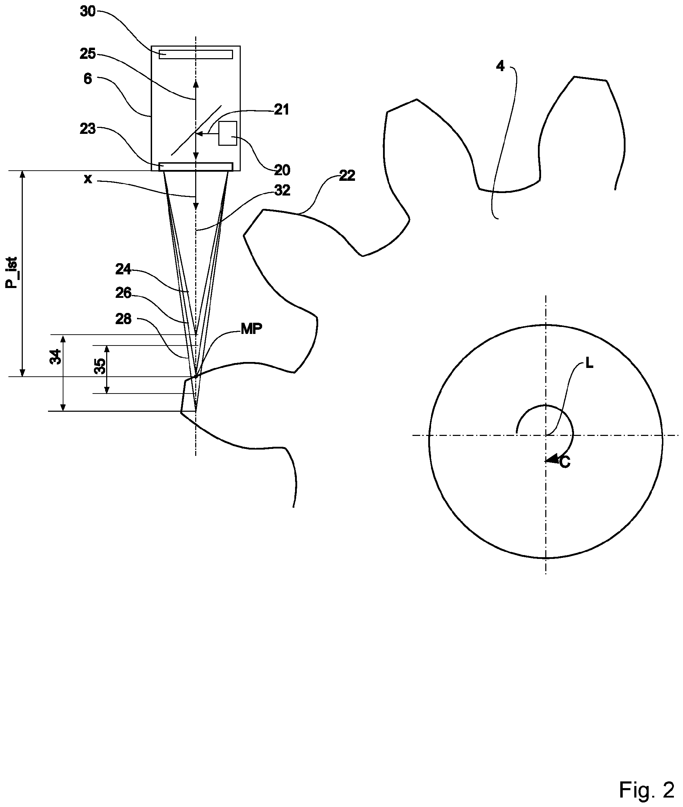

Fig. 2 zeigt schematisch den optischen Abstandssensor 6 und das Bauteil 4 in einer Draufsicht entlang der Rotationsachse bzw. Längsachse L.

Der optische Abstandssensor 6 ist ein konfokal chromatischer Abstandssensor. Während der Messung kann das Bauteil 4 um seine Längsachse L rotiert werden, um einen Messweg abzufahren. Diese Rotation bildet daher einen Teil der Messbewegung. Zudem kann der optische Abstandssensor 6 parallel zu Längsachse in z-Richtung verschoben werden. Diese Verschiebung bildet ebenfalls einen Teil der Messbewegung.

Eine Abstandsmessung mit dem konfokal chromatischen Abstandssensor 6 funktioniert derart, dass mittels einer Lichtquelle 20 erzeugtes Licht 21 in Richtung einer zu messenden Oberfläche 22 des Bauteils 4 fokussiert wird. Nach dem Durchlaufen einer Linsenanordnung 23 werden die verschiedenen Lichtfarben bzw. Wellenlängen 24, 26, 28 des Lichts 21 in verschiedenen Abständen zur Linsenanordnung 23 fokussiert. D.h. Lichtanteile gemäß der Wellenlängen 24, 26, 28 werden mit unterschiedlichem, bekanntem Abstand zum optischen Abstandssensor 6 fokussiert.

Anhand der Intensitäten der Lichtfarben des vom Bauteil 4 zurückgestrahlten Lichts 25, die mittels eines Spektrometers 30 erfasst werden, kann auf den Abstand P_ist eines Messpunkts MP der Oberfläche 22 zum optischen Abstandssensor 6 geschlossen werden. Mit anderen Worten kann durch eine spektrale Auswertung des rückgestrahlten Lichts 25 mittels des Spektrometers 30 des konfokal chromatischen Abstandssensors 6 auf die Position eines optisch erfassten Messpunkts MP der Oberfläche 22 geschlossen werden.

Der konfokal chromatische Abstandssensor 6 nutzt daher die chromatische Aberration der Linsenanordnung 23 zur Abstandsmessung.

Die absolute Lage des Messpunkts MP bezüglich des kartesischen Koordinatensystems x, y, z der Koordinatenmessvorrichtung wird errechnet, in dem der gemessene Abstand P_ist zur aktuellen Position des optischen Abstandssensors 6 hinzuaddiert wird. Die aktuelle Position des optischen Abstandssensors 6 ergibt sich aus den Positionen der Linearachsen X, Y, Z, die z.B. mittels diesen Achsen zugeordneten Glasmaßstäben hochgenau erfasst werden können.

Aus den entlang einer optischen Achse 32 des optischen Abstandssensors 6 aufgereihten Fokuspunkten der Wellenlängen 24, 26, 28 ergibt sich der zur Verfügung stehende Messbereich 34 des konfokal chromatischen Abstandssensors 6. Mit anderen Worten ergibt sich der zur Verfügung stehende Messbereich 34 des konfokal chromatischen Abstandssensors 6 dadurch, dass Wellenlängen 24, 26, 28 mit unterschiedlichem, bekanntem Abstand zum Abstandssensor 16 fokussiert werden.

Der Messbereich 34 kann auch als Tiefenmessbereich bezeichnet werden, da ein Abstand bzw. eine Tiefe entlang der optischen Achse 32 in x-Richtung gemessen werden kann.

Der Abstand P_ist des optischen Abstandssensors 6 zur zu messenden Oberfläche 22 sollte während des Abfahrens eines Messwegs derart geregelt werden, dass sich die zu messende Oberfläche 22 innerhalb des zur Verfügung stehenden Messbereichs 34 befindet. Bevorzugt wird der Abstand P_ist des optischen Abstandssensors 6 zur zu messenden Oberfläche 22 derart geregelt, dass sich die zu messende Oberfläche 22 innerhalb eines Ausschnitts 35 des zur Verfügung stehenden Messbereichs 34 befindet. Dies ist insbesondere beim Messen unbekannter Geometrien eine Herausforderung, da der optische Abstandssensor 6 einer unbekannten Kontur eines zu messenden Bauteils nachgeführt werden muss.

Die Verwendung lediglich eines Ausschnitts 35 des zur Verfügung stehenden Messbereichs hat den Vorteil, dass dieser Ausschnitt 35 im Vergleich zur Verwendung des gesamten zur Verfügung stehenden Messbereichs 34 einen geringeren Linearitätsfehler aufweist. Die Anwendung des erfindungsgemäßen Verfahrens auf die optische Messung eines Bauteils 4 mit bekannter Soll-Geometrie, wie z.B. der in Fig. 2 gezeigten Verzahnung, hat den Vorteil, dass die Messgenauigkeit durch die Verwendung lediglich eines Ausschnitts 35 des zur Verfügung stehenden Messbereichs 34 erhöht werden kann.

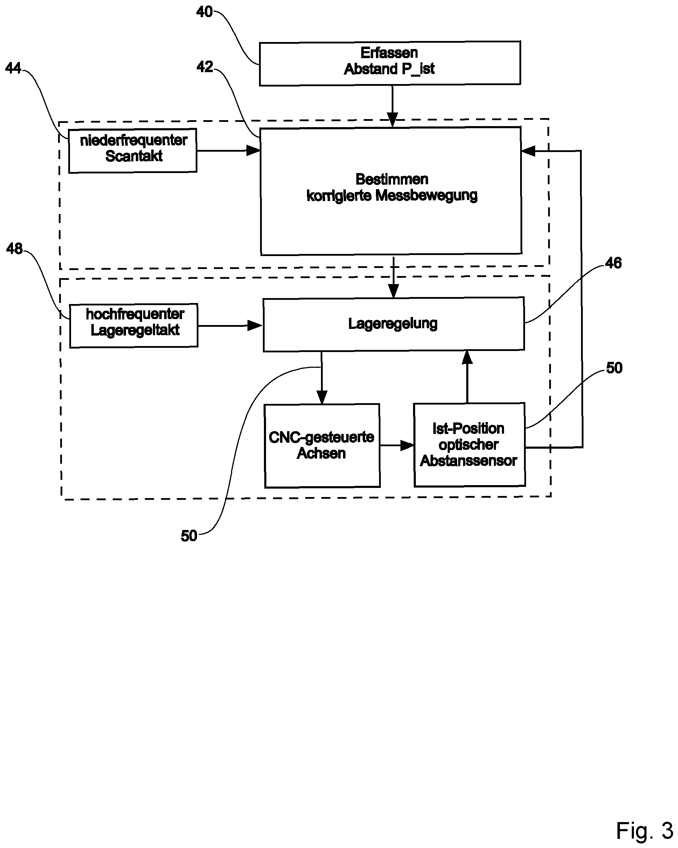

Nachfolgend wird mit Bezug zu den Figuren 3, 4 und 5 das Scannen einer unbekannten Kontur K eines Bauteils B exemplarisch und schematisch beschrieben, wobei das grundsätzliche Funktionsprinzip dieser Abstandsregelung auch für das optische Messen von Bauteilen mit bekannter Soll-Geometrie gilt.

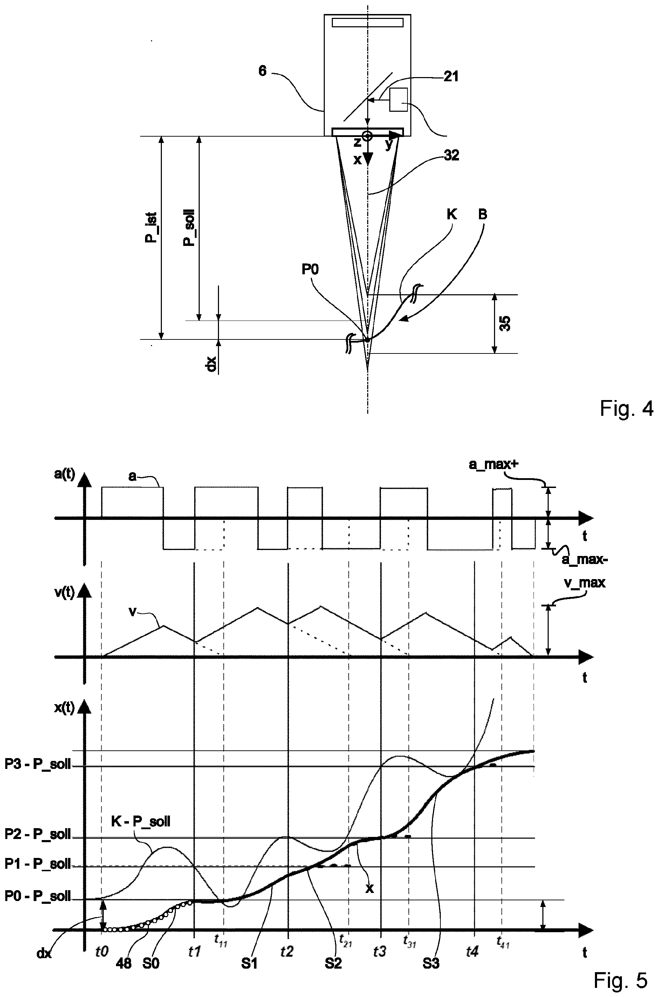

Beim Scannen bzw. scannenden Messen folgt der optische Abstandssensor 6 der zu messenden unbekannten Kontur K mit einem Abstand in x-Richtung (Fig. 4). Dieser Abstand soll auf den Soll-Abstand P_soll geregelt werden.

Der Verlauf der unbekannten Kontur K in x-Richtung abzüglich des Soll-Abstands P_soll ist in Fig. 5 als Kurve K - P_soll (in Worten: K minus P_soll) eingezeichnet, wobei die Kurve x die Position des Abstandssensors 6 in x-Richtung darstellt. Wie in Fig. 5 zu erkennen, folgt der Abstandssensor 6 der Kontur K nicht genau, sondern lediglich näherungsweise gemäß einer korrigierten Messbewegung x. Dabei wird der Abstandssensor 6 den Messpunkten P0, P1, P2, P3, die auf der unbekannten Kontur K liegen, innerhalb der Zeitintervalle t0 - t1, t1 - t2, t2 - t3, t3 - t4 segmentweise nachgeführt. Der Messpunkt P0 ist exemplarisch in Fig. 4 eingezeichnet.

Mit anderen Worten liegen die Messpunkte P0, P1, P2, P3, deren x-Position sich aus der x-Position des Abstandssensors 6 plus dem gemessenen Abstand P_ist errechnet, auf der abzufahrenden Kontur K, wobei der Abstandssensor 6 diesen Messpunkten P0, P1, P2, P3 in x-Richtung derart nachgeführt wird, dass sich die zu erfassenden Messpunkte der Kontur K innerhalb des Ausschnitts 35 des zur Verfügung stehenden Messbereichs des optischen Abstandssensors 6 befinden. So kann eine präzise Messung der Kontur K erfolgen.

Die Messbewegung insgesamt kann eine überlagerte Relativbewegung mit Bewegungsanteilen in y-Richtung und z-Richtung sein, wobei nachfolgend exemplarisch und schematisch nur auf das Regeln des Abstands und das Bestimmen einer korrigierten Messbewegung in x-Richtung eingegangen wird. Das Regeln des Abstands kann jedoch auch durch überlagerte Bewegungen der CNC-gesteuerten Achsen X, Y, Z und C der Koordinatenmessmaschine 2 erfolgen, so dass eine jeweilige korrigierte Messbewegung für jede der der CNC-gesteuerten Achsen X, Y, Z und C der Koordinatenmessmaschine 2 achsspezifisch angegeben werden kann.

In Fig. 5 bezeichnet "a" die Kurve für die Beschleunigung a(t), "v" die Kurve für die Geschwindigkeit v(t) und x die Kurve x(t) für die Position des optischen Abstandssensors 6 in x-Richtung - jeweils aufgetragen über der Zeit t. Wie bereits diskutiert, beschreibt die Kurve K - P_soll (in Worten: K minus P_soll) innerhalb des Koordinatensystems x(t) den Verlauf der zu messenden, unbekannten Kontur K in x-Richtung, die beim Abfahren des Messwegs über der Zeit t erfasst wird, abzüglich des Soll-Abstands P_soll.

Dargestellt sind in Fig. 5 vier Scantakte t0 - t1, t1 - t2, t2 - t3, t3 - t4 (in Worten: t0 bis t1, t1 bis t2, t2 bis t3, t3 bis t4). Dabei sind die Positionen P0 - P_soll (in Worten: P0 minus P_soll) bis P3-P_soll (in Worten: P3 minus P_soll) berechnete, mittels des optischen Abstandssensors 6 anzufahrende Sollpositionen in x-Richtung für die korrigierte Messbewegung. Die Punkte 48 auf der Kurve x = x(t) zeigen exemplarisch Positionen des Abstandssensors 6 in x-Richtung in Abhängigkeit von der Zeit t. Jeder Punkt 48 auf der Kurve x = x(t) kann als eine berechnete Sollposition für einen Lageregler der Linearachse X betrachtet werden.

Fig. 4 zeigt den optischen Abstandssensor 6 mit einem Ausschnitt der zu messenden, unbekannten Kontur K. Beispielsweise kann vorgesehen sein, dass der optische Abstandssensor 6 durch eine Relativbewegung in y-Richtung entlang der unbekannten Kontur K bewegt wird, um diese zu scannen. Während dieser Scanbewegung in y-Richtung findet die hier beschriebene Abstandsregelung in x-Richtung statt.

Fig. 3 zeigt Verfahrensschritte des erfindungsgemäßen Verfahrens. Alle Verfahrensschritte können auf einem Rechner bzw. einer Steuerung 43 der Koordinatenmessmaschine 2 ausgeführt werden.

Ein Verfahrensschritt 40 betrifft das Erfassen des mittels des optischen Abstandssensors 6 gemessenen Ist-Abstands P_ist. Dieser gemessene Ist-Abstand P_ist wird an einen Verfahrensschritt 42 übergeben, der das Bestimmen der korrigierten Messbewegung betrifft. Das Bestimmen der korrigierten Messbewegung erfolgt gemäß einem niederfrequenten Scantakt, der z.B. als sich wiederholendes Zeitsignal durch einen Taktgeber 44 vorgegeben wird.

Das Ergebnis des sich gemäß dem niederfrequenten Scantakt wiederholenden Bestimmens korrigierter Messbewegungen sind z.B. die in Fig. 5 gezeigten, aneinandergereihten Weg-Zeit-Segmente S0 - S3, die für vier Scantakte t0 - t1, t1 - t2, t2 - t3, t3 - t4 des niederfrequenten Scantakt berechnet worden sind.

Der niederfrequente Scan-Takt kann beispielsweise aus sich wiederholenden Scan- oder Zeitintervallen von jeweils 50 ms (Millisekunden) bestehen. D.h. die Zeitspanne t0 - t1 beträgt im vorliegenden Beispiel 50 ms. Gleichermaßen betragen die Zeitspannen t0 - t1, t1 - t2, t2 - t3, t3 - t4 jeweils 50 ms. Dies entspricht einer ersten Taktfrequenz von 20 Hz (Hertz).

Wie Fig. 3 zu entnehmen, wird die jeweilige gemäß dem niederfrequenten Scantakt berechnete, korrigierte Messbewegung an eine Lageregelung 46 der Linearachse X der Koordinatenmessmaschine übergeben. Die Lageregelung 46 arbeitet hochfrequent gemäß einem durch einen Taktgeber 48 vorgegebenen hochfrequenten Lageregeltakt.

Die Taktfrequenz der Lageregelung 46, die auch als zweite Taktfrequenz bezeichnet werden kann, ist damit größer als die Taktfrequenz des niederfrequenten Scantakts 44, die auch als erste Taktfrequenz bezeichnet werden kann. Dabei bedeutet "hochfrequent", dass die Lageregelung 46 in Zeitintervallen regelt, die wesentlich kürzer sind als die Zeitintervalle des niederfrequenten Scantakts. Beispielsweise können die Zeitintervalle der Lageregelung 1 ms betragen. Dies entspricht einer zweiten Taktfrequenz von 1000 Hz.

Fig. 5 zeigt exemplarisch und schematisch Stützpunkte 48 für das Segment S0 gemäß dem Zeitintervall t0 - t1 als helle Rauten entlang der Kurve x(t), wobei die Lageregelung 46 eine Position des Abstandssensors in x-Richtung bezüglich dieser Stützpunkte 48 regelt. Die Segmente S0 - S3 können als Verfahrwegsegmente bezeichnet werden. Die Kurve x kann als Verfahrweg bezeichnet werden. Eine Ist-Position des Abstandsensors 6 in x-Richtung wird gemäß Fig. 3 im Verfahrensschritt 50 erfasst und an den Lageregler 46 sowie an den Verfahrensschritt 42, der das Bestimmen der korrigierten Messbewegung betrifft, übergeben.

Die Lageregelung 46 des optischen Abstandssensors 6 ermittelt anhand des vorgegebenen, aktuellen Sollwerts bzw. Stützpunkts 48 der korrigierten Messbewegung x(t) und der Ist-Position des Abstandsensors 6 ein Stellsignal 50, mit dem der Linearantrieb X angesteuert wird, um den Abstandsensor 6 gemäß derjenigen Sollposition 48, die entsprechend der korrigierten Messbewegung in x-Richtung vorgesehen ist, zu positionieren.

Wie in Fig. 5 zu erkennen, finden die Bewegungen des Abstandsensors 6 in x-Richtung unter der Einhaltung von Grenzwerten für eine maximal zulässige, positive und negative Beschleunigung a_max+ und a_max-, sowie einer maximal zulässigen Geschwindigkeit v_max statt. Das Vorgeben dieser Grenzwerte kann die Gefahr für eine Schwingungsanregung bzw. ein Aufschwingen im Messbetrieb reduzieren.

Ziel des erfindungsgemäßen Verfahren ist es, den optischen Abstandssensor 6 in x-Richtung mit einem Abstand P_soll relativ zu der unbekannten Kontur K zu führen, so dass die Kontur K innerhalb des Ausschnitts 35 des zur Verfügung stehenden Messbereichs erfasst wird. Dabei wird bewusst in Kauf genommen, dass durch den niederfrequenten Scantakt eine Abstandsabweichung dx innerhalb der Grenzen des Ausschnitts 35 entsteht, um ein Übertragen kurzwelliger Abschnitte der Kontur K in die Achskinematik zu vermeiden.

Das erfindungsgemäße Verfahren weist hierzu insbesondere die folgenden Verfahrensschritte auf:
- Messen von absoluten Positionen P0, P1, P2, P3 etc. der unbekannten Kontur K im kartesischen Koordinatensystem x, y, z der Koordinatenmessmaschine 2. Diese absoluten Positionen P0, P1, P2, P3 ergeben sich aus der Position des optischen Abstandssensor 6 im kartesichern Koordinatensystem x, y, z der Koordinatenmessmaschine 2 und dem jeweiligen gemessenen Ist-Abstand P_ist in x-Richtung.
- Segmentweises Berechnen einer korrigierten Messbewegung für die Linearachse X, die auch als Sensorachse bezeichnet werden kann, wobei der optische Abstandssensor 6 der unbekannten Kontur K nachgeführt wird. Hierbei können eine aktuelle Geschwindigkeit und eine aktuelle Beschleunigung zum Zeitpunkt des Bestimmens der korrigierten Messbewegung berücksichtigt werden und zudem die Einhaltung der vorgegebenen Grenzwerte für die Beschleunigung und die Geschwindigkeit berücksichtigt werden.
- Ausführen der korrigierten Messbewegung unter Einhaltung der vorgegebenen Grenzwerte für die Beschleunigung und die Geschwindigkeit.
- Erfassen der Kontur K während des Ausführens der korrigierten Messbewegung anhand gemessener Abstände P_ist.

Es versteht sich, dass das kartesische Koordinatensystem an einer beliebigen Stelle der Koordinatenmessmaschine 2 definiert werden kann. Die vorliegend gewählte Anordnung ist lediglich exemplarisch zu verstehen und dient der vereinfachten Beschreibung.

Fig. 5 zeigt am Beispiel von vier Zeitintervallen t0 - t1, t1 - t2, t2 - t3, t3 - t4 des niederfrequenten Scantakts die Bewegung des optischen Abstandssensors 6 in x-Richtung in Abhängigkeit von der Zeit t.

Zur Vereinfachung der Darstellung beginnt das erste Zeitintervall t0 - t1 im Zeitpunkt t0 mit x(t0) = 0 und v(t0) = 0. Ein vorgegebener Sollwert für den Soll-Abstand P_soll des Abstandssensors 6 in x-Richtung ist für den gesamten betrachteten Zeitraum t0 bis t4 konstant.

Dem Verfahrensschritt 42, der das Bestimmen der korrigierten Messbewegung betrifft, werden als Eingangsgrößen zum Zeitpunkt t0 eine gemessene Abstandsabweichung dx, d.h. die Differenz von P_ist zu P_soll, bzw. der gemessene Abstand P_ist, sowie die Absolutposition des optischen Abstandssensors 6 in x-Richtung bezüglich des kartesischen Koordinatensystems x, y, z der Koordinatenmessvorrichtung 2 zur Verfügung gestellt. D.h. die Absolutposition des Messpunkts P0 der Kontur in x-Richtung errechnet sich zum Zeitpunkt t0 aus der Absolutposition des optischen Abstandssensors 6 in x-Richtung sowie aus dem gemessenen Abstand P_ist in x-Richtung.

Generell ist es das Ziel, den optischen Abstandsensor 6 mittels der Linearachse X derart in x-Richtung zu verfahren, dass sich zu erfassende Messpunkte der Kontur K innerhalb des Ausschnitts 35 des zur Verfügung stehenden Messbereichs befinden. Dabei wird bewusst in Kauf genommen, dass aufgrund des verzögerten Nachführens des optischen Sensors 6 gemäß dem niederfrequenten Scantakts eine Abstandsabweichung dx entsteht. Denn der optische Abstandsensor 6 wird der unbekannten Kontur K aufgrund der vorgeschlagenen Abstandsregelung anhand vorhergehend gemessener Positionen immer nacheilen.

Per Definition des in Fig. 4 gezeigten kartesischen Koordinatensystems gilt, dass, sofern der Punkt P0 der unbekannten Kontur K in x-Richtung zum Zeitpunkt t0 genau im Sollabstand P_soll relativ zum optischen Abstandssensor 6 angeordnet wäre, die Abstandsabweichung dx im Zeitpunkt t0 gleich Null wäre. Dies ist vorliegend jedoch nicht der Fall, wie in Fig. 4 und Fig. 5 zu erkenne. Die absolute Position des Punkts P0 in x-Richtung ergibt sich aus der x-Position des optischen Abstandssensors 6 zum Zeitpunkt t0 (vorliegend x=0) plus dem zum Zeitpunkt t0 gemessenen Abstand P_ist. Die Abstandsabweichung dx ergibt sich daher zum Zeitpunkt t0 aus der Differenz von P0 minus P_soll, was in Fig. 5 als Position P0 - P_soll (in Worten: P0 minus P_soll) auf der x-Achse markiert worden ist.

Wie bereits erwähnt, ist die gemessene Absolutposition des Messpunkts P0 der unbekannten Kontur K in x-Richtung eine Eingangsgröße für das Bestimmen der korrigierten Messbewegung für das Intervall t0 - t1 gemäß Verfahrensschritt 42.

Gemäß Verfahrensschritt 42 kann für das Zeitintervall t0 - t1 eine Weg-Zeit-Kurve S0, d.h. ein Verfahrwegsegment S0, z.B. durch zweimalige Integration der vorgegebenen Maximalbeschleunigungen a_max+ und a_max- berechnet werden.

Wie die Kurve a (t) in Fig. 5 zeigt, wird der optische Abstandssensor 6 von der gesteuerten Linearachse X zunächst mit a_max+ beschleunigt und anschließend mit a_max- gebremst, so dass die Geschwindigkeitskurve v(t) im Zeitraum t0 - t1 zunächst linear ansteigt und anschließend linear abfällt.

Die zugehörige Weg-Zeit-Kurve x(t) bzw. S0 verläuft infolgedessen S-förmig. Insbesondere kann vorgesehen sein, dass der optische Abstandssensor 6 seine Sollposition P0 - P_soll (in Worten: P0 minus P_soll), d.h. den Messpunkt P0 der Kontur K abzüglich des Sollabstands P_soll, möglichst schnell erreichen, aber seine Bewegung zum Zeitpunkt t₁₁ mit der Geschwindigkeit v = 0 beenden soll.

Aufgrund der berechneten ersten Weg-Zeit-Kurve S0 würde der optische Abstandssensor 6 die Sollposition P0 - P_soll (in Worten: P0 minus P_soll) in x-Richtung im Zeitpunkt t₁₁ erreichen. Wie Fig. 5 jedoch zeigt, endet das aktuelle Zeitintervall t0 - t1 bereits im Zeitpunkt t1, d.h. vor dem Zeitpunkt t₁₁.

In diesem Moment t1 wird gemäß dem Scantakt bereits eine neue Weg-Zeit-Kurve S1 für das zweite Zeitintervall t1 - t2 bestimmt, d.h. eine weitere korrigierte Messbewegung bestimmt. Dazu wird im Verfahrensschritt 42, in gleicher Weise wie zuvor, die gemessene Absolutposition des Messpunkts P1 der Kontur K bestimmt, und der Rechner 43 berechnet die Weg-Zeit-Kurve S1 durch zweimalige Integration von a(t) für t1 - t2. Weiter werden auch die momentane Position und momentane Geschwindigkeit des optischen Abstandssensors 6 berücksichtigt, die dieser zum Zeitpunkt t1 erreicht hat. Dadurch schließt die zweite Weg-Zeit-Kurve S1 im Zeitpunkt t1 tangential an die erste Weg-Zeit-Kurve S0 an. Die Bewegung des optischen Abstandssensors 6 folgt daher einem stetigen, glatten Wegprofil und würde im Zeitpunkt t₂₁ in der Position P1 - P_soll (in Worten: P1 minus P_soll) mit der Geschwindigkeit v = 0 enden.

Auch hier gilt jedoch, dass der optische Abstandssensor 6 die Position P1 - P_soll (in Worten: P1 minus P_soll) zum Zeitpunkt t₂₁ nicht erreicht wird, da das Zeitintervall t1 - t2 des zweiten Scantakts bereits vor dem Zeitpunkt t₂₁ endet.

Im Zeitpunkt t2 schließt sich somit die dritte Weg-Zeit-Kurve S2 an die Kurve S1 an - wiederum in stetigem und glattem Übergang. Im Zeitpunkt t2 wird gemäß Verfahrensschritt 42 daher wiederum die gemessene Absolutposition des Messpunkts P2 der Kontur K erfasst und in die korrigierte Messbewegung voranstehend beschriebener Weise berechnet. Die gilt gleichermaßen für das Intervall t3 - t4.

In Fig. 5 ist zu erkennen, dass der Weg x gemäß der niederfrequent korrigierten Messbewegung die Kontur K mit einer gewissen Dämpfung bzw. Glättung nachbildet. Dies wird durch die erfindungsmäße Entkopplung der Messung der Abstandsabweichung von der Lageregelung und durch den niederfrequenten Scantakt erreicht.

Die gemessenen Absolutpositionen P0, P1, P2, P3 der Kontur werden nur einmal pro Scantakt zum Bestimmen der korrigierten Messbewegung erfasst, also z. B. alle 50 ms. Hingegen werden die einzelnen Stützpunkte 48 auf der Kurve x wesentlich häufiger bestimmt und von der Linearachse X ausgeregelt, beispielsweise alle 1 ms. Das heißt, der optische Abstandssensor 6 fährt aufgrund des hochfrequenten Taktes der Lageregelung zwar nicht absolut genau, aber immer sehr nahe entlang einer glatten, durch Integration berechneten Kurve gemäß der korrigierten Messbewegung. Deren Verlauf wird in vergleichsweise großen Zeitintervallen an die tatsächliche Kontur K angepasst, ohne dadurch Sprünge oder andere Störungen der Kontur K in die Wegkurve x der korrigierten Messbewegung zu übertragen. Wie bereits erwähnt, werden daher Abstandsabweichungen dx akzeptiert, um ein Übertragen von kurwelligen Profilkonturen in die Achskinematik der Koordinatenmessmaschine 2 zu übertragen. Der Abstandssensor 6 wird der Kontur K daher mit einer sprungfreien, geglätteten Bewegung nachgeführt, die einer geglätteten Form der Kontur K entspricht.

## Patentansprüche

1. Verfahren, mit den Verfahrensschritten:
- Messen eines Bauteils (4, B) mittels eines optischen Abstandssensors (6) einer Koordinatenmessmaschine (2), wobei ein Messweg mittels einer Messbewegung abgefahren wird; und
- Regeln eines Abstands des optischen Abstandssensors (6) zu dem Bauteil (4, B) während des Messens;
**dadurch gekennzeichnet,**
- **dass** das Regeln des Abstands ein Bestimmen einer korrigierten Messbewegung gemäß einer ersten Taktfrequenz aufweist, und
- **dass** das Regeln des Abstands eine Lagereglung zum Abfahren der korrigierten Messbewegung gemäß einer zweiten Taktfrequenz aufweist, wobei die zweite Taktfrequenz größer ist als die erste Taktfrequenz.

2. Verfahren nach Anspruch 1,
**dadurch gekennzeichnet, dass**
das Bestimmen der korrigierten Messbewegung für einen jeweiligen Takt der ersten Taktfrequenz das Bestimmen eines Weg-Zeit-Profils (S0, S1, S2, S3) aufweist, wobei eine Taktzeit des ersten Takts geringer ist als eine Zeitspanne des bestimmten Weg-Zeit-Profils (S0, S1, S2, S3), so dass eine weitere korrigierte Messbewegung mit einem weiteren Weg-Zeit-Profil (S0, S1, S2, S3) bereits bestimmt wird, bevor ein Ende des zuvor bestimmten Weg-Zeit-Profils (S0, S1, S2, S3) erreicht worden ist.

3. Verfahren nach Anspruch 1 oder Anspruch 2,
**dadurch gekennzeichnet, dass**
zum Bestimmen der korrigierten Messbewegung eine Abstandsabweichung (dx) des optischen Sensors (6) im Vergleich zu einem vorgegebenen Soll-Abstand (P_soll) zum Bauteil (4, B) gemessen wird, wobei die Abstandsabweichung (dx) insbesondere gemäß der ersten Taktfrequenz erfasst wird.

4. Verfahren nach einem der voranstehenden Ansprüche,
**dadurch gekennzeichnet, dass**
der optische Abstandssensor (6) ein konfokal chromatischer Abstandssensor (6) ist.

5. Verfahren nach einem der voranstehenden Ansprüche,
**dadurch gekennzeichnet, dass**
die korrigierte Messbewegung einen sprungfreien Verfahrweg (x) aufweist, wobei der optische Abstandssensor (6) einer zu messenden Kontur (22, K) des Bauteils (4, B) entlang dieses sprungfreien Verfahrwegs (x) nachgeführt wird.

6. Verfahren nach Anspruch 5,
**dadurch gekennzeichnet, dass**
der sprungfreie Verfahrweg (x) segmentweise aus Verfahrwegsegmenten (S0, S1, S2, S3) zusammengesetzt wird, wobei sich die Verfahrwegsegmente (S0, S1, S2, S3) jeweils durch glatte Funktionen beschreiben lassen, wobei die Verfahrwegsegmente (S0, S1, S2, S3) gemäß der ersten Taktfrequenz bestimmt werden, und wobei sich der sprungfreie Verfahrweg (x) durch eine glatte Funktion beschreiben lässt.

7. Verfahren nach einem der voranstehenden Ansprüche,
**dadurch gekennzeichnet, dass**
während des Abfahrens der korrigierten Messbewegung ein Beschleunigen und Abbremsen erfolgt, wobei die Beschleunigung durch eine maximal zulässige Beschleunigung (a_max+, a_max-) und eine maximal zulässige Geschwindigkeit (v_max) begrenzt sind.

8. Verfahren nach einem der voranstehenden Ansprüche,
**dadurch gekennzeichnet, dass**
das Regeln des Abstands mittels mindestens einer gesteuerten Achse (X) der Koordinatenmessmaschine (2) erfolgt, wobei diese gesteuerte Achse (X) den optischen Abstandssensor (6) trägt und wobei diese gesteuerte Achse (X) parallel zu einer optischen Achse (32) des optischen Abstandssensors (6) verfahrbar ist.

9. Verfahren nach einem der voranstehenden Ansprüche,
**dadurch gekennzeichnet, dass**
während der Messbewegung eine Abstandsabweichung (dx) des optischen Abstandssensors (6) im Vergleich zu einem vorgegebenen Soll-Abstand (P_soll) aufgrund der korrigierten Messbewegung kleiner ist als 2 mm.

10. Koordinatenmessmaschine,
mit einem optischen Abstandssensor (6) zum Messen eines Bauteils (4, B), mit einer Steuerung (43), wobei die Steuerung (43) zur Ausführung eines Verfahrens nach einem der voranstehenden Ansprüche eingerichtet ist.
